# EUROPÄISCHE PATENTSCHRIFT

(11) **EP 4 248 177 B1**
(45) Veröffentlichungstag und Bekanntmachung des Hinweises auf die Patenterteilung: **02.10.2024**
(21) Anmeldenummer: 21802292.9
(22) Anmeldetag: 28.10.2021
(51) Int. Cl.: G01F 15/14, G01F 23/288, G21F 5/015

(54) **STRAHLENSCHUTZBEHÄLTER FÜR RADIOMETRISCHE MESSGERÄTE**
RADIOPROTECTIVE CONTAINER FOR RADIOMETRIC MEASURING DEVICES
BOÎTIER RADIOPROTECTEUR DESTINÉ À DES DISPOSITIFS DE MESURE RADIOMÉTRIQUES

(30) Priorität: 19.11.2020 DE 102020130624
(43) Veröffentlichungstag der Anmeldung: 27.09.2023
(73) Patentinhaber: Endress+Hauser SE+Co. KG, 79689 Maulburg (DE)
(72) Erfinder: STOLZ, Lars, 79591 Eimeldingen (DE); GABEL, Romy, 79618 Rheinfelden (DE); WEIDENBRUCH, Simon, 79541 Lörrach (DE)
(74) Vertreter: Büker, Florian
(86) Internationale Anmeldenummer: PCT/EP2021/080020
(87) Internationale Veröffentlichungsnummer: WO 2022/106175

(56) Entgegenhaltungen:
- CN-U- 210 271 811
- DE-A1- 102011 077 304
- DE-A1- 102014 101 373
- US-A1- 2017 294 244
- US-B1- 6 190 303

## Beschreibung

Die Erfindung betrifft einen Strahlenschutzbehälter zur radiometrischen Dichte- oder Füllstandsmessung.

In der Automatisierungstechnik, insbesondere in der Prozessautomatisie-rungstechnik, werden vielfach Feldgeräte eingesetzt, die zur Erfassung und/oder zur Beeinflussung von Prozessvariablen dienen. Zur Erfassung von Prozessvariablen werden Sensoren eingesetzt, die beispielsweise in Füllstandsmessgeräten, Durchflussmessgeräten, Druck- und Temperaturmessgeräten, pH-Redoxpotential-Messgeräten, Leitfähigkeitsmessgeräten, usw. zum Einsatz kommen. Sie erfassen die entsprechenden Prozessvariablen, wie Füllstand, Durchfluss, Druck, Temperatur, pH-Wert, Redoxpotential oder Leitfähigkeit. Zur Beeinflussung von Prozessvariablen dienen Aktoren, wie unter Anderem Ventile oder Pumpen, über die der Durchfluss einer Flüssigkeit in einem Rohrleitungsabschnitt bzw. der Füllstand in einem Behälter geändert werden kann. Unter dem Begriff "Behälter" werden im Rahmen der Erfindung auch nicht-abgeschlossene Behältnisse, wie beispielsweise Becken, Seen oder fließende Gewässer verstanden. Allgemein werden auch all diejenigen Geräte als Feldgeräte bezeichnet, die prozessnah eingesetzt werden und die prozessrelevante Informationen liefern oder verarbeiten. Eine Vielzahl dieser Feldgeräte wird von der Firma Endress + Hauser hergestellt und vertrieben.

Im Fall von Dichte- oder Füllstandsmessungen werden oftmals Feldgeräte eingesetzt, deren Messmethode auf Radiometrie basiert. Bei dieser Messmethode wird radioaktive Strahlung (beispielsweise Gamma-Strahlung einer Cäsium- oder Kobalt-Quelle) genutzt, die von einer radioaktiven Strahlenquelle des Messgerätes ausgesendet und durch den Behälter mit dem zu messenden Füllgut geleitet wird. Nach Durchgang durch den Behälter wird die transmittierte Strahlungsintensität von einer Detektor-Einheit des Messgerätes erfasst. Durch die Auswertung des Detektorsignals wird der transmittierte Anteil der ausgesandten Strahlungsintensität bestimmt. Auf Basis dessen wird auf die Dichte oder den Füllstand des Füllgutes geschlossen. Dabei kann der transmittierte Anteil der radioaktiven Strahlungsleistung nach Durchgang durch den Behälter nicht direkt detektiert werden, sondern die radioaktive Strahlung muss durch ein hierfür geeignetes Material zuerst in elektromagnetische Strahlung im optischen Spektralbereich umgewandelt werden, bevor die Strahlungsleistung von einem Photomultiplier (oder alternativ einer oder mehrerer Avalanche-Photodioden) innerhalb der Detektor-Einheit detektiert werden kann. Materialien, die diese Eigenschaft aufweisen, werden als szintillierende Materialien bezeichnet. Unter anderem Polystyrol weist diese szintillierende Eigenschaft auf. Erst die im optischen Spektralbereich liegende Strahlung kann vom Photomultiplier oder detektiert werden. Aus dem Stand der Technik sind radiometrische Füllstands- oder Dichtemessgeräte bereits bekannt. Das grundlegende Funktionsprinzip ist beispielsweise in der Patentschrift EP 2 208 031 B1 beschrieben.

Zum sicheren Transport der Strahlenquelle und zu dessen sicheren Messbetrieb wird ein abschirmender Strahlenschutzbehälter verwendet. Dieser muss einerseits so ausgelegt sein, dass die Strahlenquelle vor Beschädigung und vor Ausbau durch Unbefugte geschützt ist. Andererseits muss der Strahlenschutzbehälter die Strahlung zur Umgebung hin abschirmen. Dazu ist der Strahlenschutzbehälter nach dem Stand der Technik aus Blei oder einem anderen radioaktiv abdichtenden Material aufgebaut.

Der Strahlenschutzbehälter weist für den Messbetrieb einen offenen Endbereich auf, so dass ein gebündelter Nutzstrahl aus dem Strahlenschutz-Behälter in Richtung der Detektor-Einheit austreten kann. Der am Ende eines Strahlen-Hohlleiters befindliche Endbereich kann zur sicheren Aufbewahrung und Transport der Quelle im Strahlenschutzbehälter verschlossen werden. Der Verschluss kann dabei über bewegliche, abschirmende Shutter bzw. drehbare/verschiebbare Strahlenquellen erfolgen. Bei der Herstellung des abschirmenden Strahlenschutzbehälters wird der Strahlen-Hohlleiter durch Aussparungen beim Gießen des Blei- oder Stahlguss-basierten Grundkörper, oder nachträglich durch Fräsen oder Bohren des gegossenen Grundkörpers erstellt.

Aus Blei gefertigte Strahlenschutzbehälter weisen insbesondere bei Anwendung in höheren Umgebungstemperaturen und/oder bezüglich der Feuerfestigkeit deutliche Nachteile auf. Es ist daher naheliegend, den Blei-basierten Grundkörper des Strahlenschutzbehälters durch einen Feuer-/hochtemperaturfesten Grundkörper aus Stahl oder Wolfram zu ersetzen. Sofern der Strahlenschutzbehälter analog zu Blei aus Guss-Stahl gefertigt wird, (was bei Wolfram per se nicht möglich ist) so ist die Fertigung des Strahlenschutzbehälters im Vergleich zu vergleichbar günstigem und auch einfach zu gießendem Blei wesentlich unwirtschaftlicher.

Für den Fall, dass zur Herstellung des Strahlenschutzbehälters massives Rohmaterial, beispielsweise in Form von Strangprofilen oder Rundmaterial verwendet wird, so ist der notwendige Strahlen-Hohlleiter im Inneren des Strahlenschutzbehälters zum gerichteten Aussenden der Strahlung entlang der Strahl-Achse nur durch aufwändiges Fräsen, Bohren oder Erodieren herzustellen. Hinsichtlich der erforderlichen Abschirmdicke muss der Strahlen-Hohlleiter in diesen Fällen mehrere Zentimeter tief eingearbeitet werden, was wiederum technisch sehr aufwendig und teuer ist. Additive Verfahren zur Herstellung der Abschirmung, also beispielsweise 3D-Druckverfahren, sind aus wirtschaftlicher Sicht ebenfalls nicht praktikabel.

In der Veröffentlichungsschrift US 20170294244 A1 ist ein Strahlenschutzbehälter gezeigt, der zwecks Fertigbarkeit zweiteilig aufgebaut ist und dementsprechend zwei Grundkörper mit jeweils einer planaren Oberfläche umfasst. Die Grundkörper werden hierbei an den Oberflächen formschlüssig verbunden, so dass die Oberflächen eine planare Ebene definieren. In der Ebene verläuft S-förmig ein Strahlen-Hohlleiter, der durch die zwei Grundkörper ausgebildet wird. Dabei ist am ersten, offenen Endbereich des Strahlen-Hohlleiters die Strahlenquelle fixierbar.

Der Erfindung liegt die Aufgabe zugrunde, einen sicheren und temperaturbeständigen Strahlenschutzbehälter bereitzustellen, der wirtschaftlich herstellbar ist.

Die Erfindung löst diese Aufgabe durch einen Strahlenschutzbehälter für eine Strahlenquelle eines Mess-Systems, das zur radiometrischen Dichte- oder Füllstandsmessung dient. Hierzu umfasst der Strahlenschutzbehälter:
- Einen ersten Grundkörper mit einer ersten, planaren Oberfläche,
- einen zweiten Grundkörper mit einer zweiten, planaren Oberfläche,
- ein erstes Verbindungsmittel, welches den ersten Grundkörper und den zweiten Grundkörper an den Oberflächen derart formschlüssig verbindet, dass die Oberflächen eine planare Ebene definieren,
- einen in der Ebene verlaufenden, gerad-achsigen Strahlen-Hohlleiter, der durch eine entsprechende Vertiefung in zumindest einer der Oberflächen der zwei Grundkörper ausgebildet wird, mit
   ∘ einem ersten, offenen Endbereich, an dem die Strahlenquelle fixierbar ist, und
   ∘ einem zweiten, offenen Endbereich,
- zumindest eine erste Strahlen-Absorptionsstruktur, welche derart durch Vertiefungen und komplementäre Erhebungen in der ersten Oberfläche bzw. in der zweiten Oberfläche ausgebildet wird, dass die erste Strahlen-Absorptionsstruktur, ausgehend vom Strahlen-Hohlleiter, in der Ebene verläuft.

Die zweiteilige Auslegung des Strahlenschutzbehälters ermöglicht es, temperaturbeständigen Stahl als Fertigungsmaterial der Grundkörper zu verwenden, wobei der Strahlen-Hohlleiter vor dem Verbinden der Grundkörper beispielsweise mittels Oberflächenbearbeitung aufwandsarm hergestellt werden kann. Die Abschirmung gegen seitliches Austreten der Strahlung entlang der Ebene wird im verbundenen Zustand der Grundkörper bzw. während des Messbetriebs des Mess-Systems erfindungsgemäß durch die Strahlen-Absorptionsstruktur gewährleistet.

Damit der Strahlenschutzbehälter in Bezug zum Strahlen-Hohlleiter beidseitig gegen Strahlungs-Austritt abschirmt, ist es von Vorteil, wenn die Strahlen-Absorptionsstruktur in Bezug zur Strahl-Achse in der Ebene beidseitig -insbesondere symmetrisch - jeweils einen vom Strahlen-Hohlleiter ausgehenden Verlauf aufweist. Dabei kann die Strahlen-Absorptionsstruktur in Bezug zur Strahl-Achse mit einem Verlauf konzipiert werden, der in der Ebene zum ersten Endbereich hin kreissegmentförmig um bis zu 90° gekrümmt ist, um ausgehend von der Strahlenquelle beidseitig des Strahlen-Hohlleiters eine vollständige Abschirmung um +/- 90° zu erzielen. Noch weiter verbessert werden kann die Abschirmung, wenn der Strahlenschutzbehälter nicht nur eine, mehrere in der Ebene angeordnete Strahlen-Absorptionsstrukturen umfasst, die in Bezug zur Strahl-Achse jeweils in zunehmender Entfernung zum ersten Endbereich angeordnet sind. Der Querschnitt der Strahlen-Absorptionsstruktur richtet sich nach deren FertigungsVerfahren. Abschirmungstechnisch ist es am effektivsten, wenn die Strahlen-Absorptionsstruktur einen rechteckigen Querschnitt aufweist.

Im Rahmen der Erfindung ist es nicht fest vorgegeben, wie die zwei Grundkörper verbunden werden. Im Falle von Stahl-basierten Grundkörpern kann das erste Verbindungsmittel beispielsweise als Schweißverbdingung ausgelegt werden. Im einfachsten Fall kann das erste Verbindungsmittel jedoch beispielsweise auch als Schraubverbindung ausgelegt werden.

Auf Basis des erfindungsgemäßen Strahlenschutzbehälters kann mittels folgender, zusätzlicher Komponenten ein Mess-System zur radiometrischen Bestimmung der Dichte- und/oder Füllstands eines in einem Behälter befindlichen Füllgutes realisiert werden, wobei der Strahlenschutzbehälter hierzu derart in Bezug zum Behälter anzubringen ist, dass der zweite Endbereich des Strahlen-Hohlleiter und somit die Strahl-Achse in Richtung des Behälter gerichtet ist:
- Eine radioaktive Strahlenquelle, die beispielsweise mittels eines entsprechenden Einsatzes am ersten Endbereich des Strahlen-Hohlleiters befestigbar ist,
- eine Detektor-Einheit, die der Strahlenquelle derart gegenüberliegend am Behälter in der Strahl-Achse anbringbar ist, um eine Strahlenintensität der Strahlenquelle nach Durchstrahlen des Füllgutes zu detektieren, und
- eine Auswertungs-Einheit, die ausgelegt ist, um anhand der empfangenen Strahlenintensität die Dichte und/oder den Füllstand des Füllgutes im Behälter zu bestimmen.

Die Strahlenquelle bzw. ein entsprechender Einsatz für die Strahlenquelle kann korrespondierend zu einem Gewinde an den Grundkörpern mit einem entsprechenden Innen- bzw. Außengewinde konzipiert werden, so dass die Strahlenquelle mittels der resultierenden Schraubverbindung am Strahlenschutzbehälter befestigt werden kann. Dabei kann die Schraubverbindung derart umgesetzt realisiert werden, dass die Gewinde-Achse der Schraubverbindung parallel zur Strahl-Achse der Strahlen-Hohlleiters verläuft. Eine derartige Befestigung der Strahlenquelle am Strahlenschutzbehälter mittels Schraubverbindung bietet den Vorteil, dass der Strahlenschutzbehälter zum sicheren Transport der Strahlenquelle mit einer Shutter-Funktion versehen werden kann. Hierzu sind die Strahlenquelle in Bezug zur Gewinde-Achse der Schraubverbindung mit einem definierten radialen Versatz anzuordnen, und der Strahlen-Hohlleiter ist derart innerhalb der Ebene anzuordnen, dass dessen Strahl-Achse den selben, definierten radialen Versatz zur Gewinde-Achse der Schraubverbindung, wie der radiale Versatz der Strahlenquelle in Bezug zur Gewinde-Achse, aufweist. Somit liegt die Strahlenquelle je nachdem, wie weit der Einsatz bzw. die Strahlenquelle verschraubt ist, deckungsgleich zur Strahl-Achse des Strahlen-Hohlleiters. Dies entspricht einem geöffneten Zustand des Shutters. Wenn die Schraubverbindung nicht in dieser Position verschraubt ist, so dass die Strahlenquelle nicht deckungsgleich zur Strahl-Achse des Strahlen-Hohlleiters ist, entspricht dies einem geschlossenem Zustand des Shutters. Diesbezüglich ist es optimal, die Schraubverbindung so zu konzipieren, dass die Strahlenquelle bei Endanschlag der Schraubverbindung in der Strahl-Achse des Strahlen-Hohlleiters liegt, so dass der resultierende Shutter bei Endanschlag der Schraubverbindung geöffnet ist.

Die Erfindung wird anhand der nachfolgenden Figuren näher erläutert. Es zeigt:
Fig. 1: ein radiometrisches Messgerät an einem Behälter,
Fig. 2: eine erste Querschnittsansicht des erfindungsgemäßen Strahlenschutzbehälters, und
Fig. 3: eine zweite Querschnittsansicht des erfindungsgemäßen Strahlenschutzbehälters.

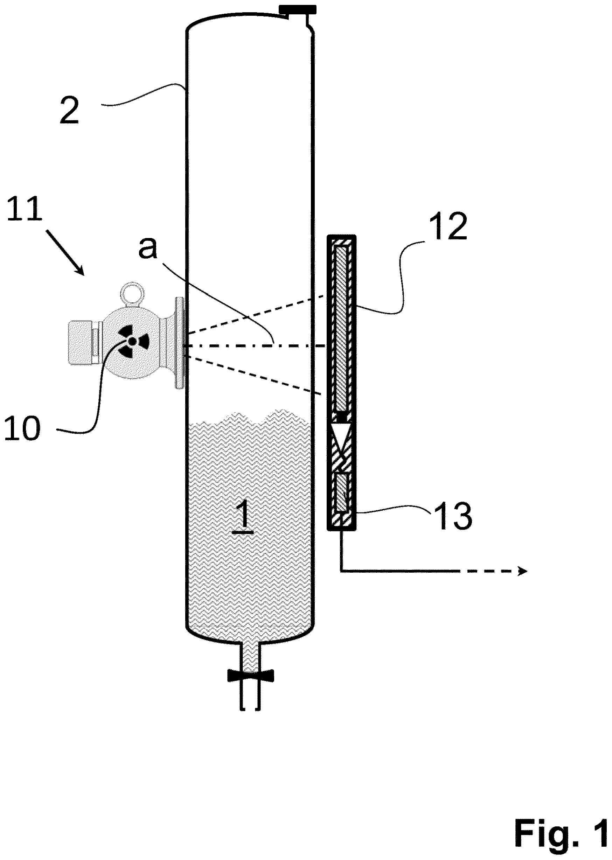

Zum allgemeinen Verständnis von radiometrischer Dichte- und Füllstandsmessung ist in Fig. 1 ein Behälter 2 gezeigt, der mit einem Füllgut 1 befüllt ist. Je nach Einsatzgebiet des Behälters 2 bzw. Art des Füllgutes 1 ist die Dichte und/oder der Füllstand des Füllgutes 1 im Behälter 2 zu bestimmen. Hierzu ist am Behälter 2 ein auf Radiometrie basiertes Mess-System angeordnet. Dabei umfasst das Mess-System eine Strahlenquelle 10, eine Detektor-Einheit 12 und eine der Detektor-Einheit 12 nachgeschalteten Auswertungs-Einheit 13. Die Strahlenquelle 10 befindet sich in einem Strahlenschutzbehälter 11, welcher im geöffneten Zustand erlaubt, dass die Strahlung der Strahlenquelle 10 entlang einer definierten Strahl-Achse a austritt.

Zur Dichte- bzw. Füllstands-Messung sind der Strahlenschutzbehälter 11 und die Detektor-Einheit 12 derart angeordnet, dass einerseits die Strahl-Achse a des Strahlenschutzbehälters 11 gen Füllgut 1 gerichtet ist. Des Weiteren ist die Detektor-Einheit 12 in Bezug zum Behälter 2 dem Strahlenschutzbehälter 11 derart gegenüberliegend angeordnet, dass die Detektor-Einheit 12 möglichst zentral in der Strahl-Achse a der Strahlenquelle 10 angeordnet ist, um die Intensität der Strahlung nach Durchgang durch das Füllgut 1 zu erfassen. Hierzu können der Strahlenschutzbehälter 11 und die Detektor-Einheit 12 entweder direkt am Behälter 2 montiert sein, oder indirekt an entsprechend freistehenden Stativen. Auf Basis dieser - indirekt per Szintillator - ermittelten Strahlungsintensität kann die Auswertungs-Einheit 13 je nach Anforderung, beispielsweise nach entsprechender Kalibrierung am Behälter 2, die Dichte bzw. den Füllstand bestimmen.

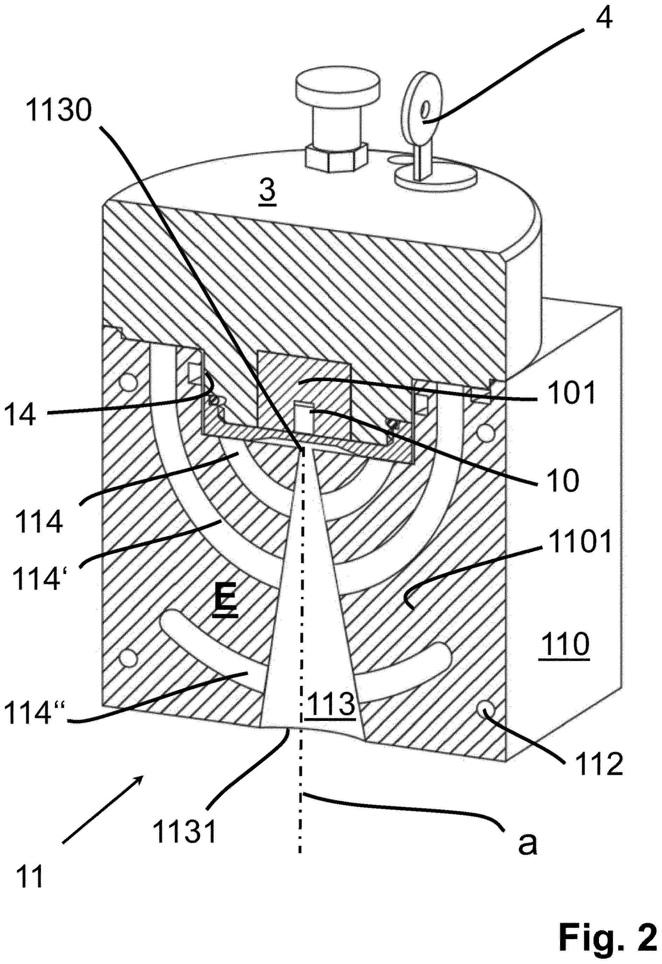

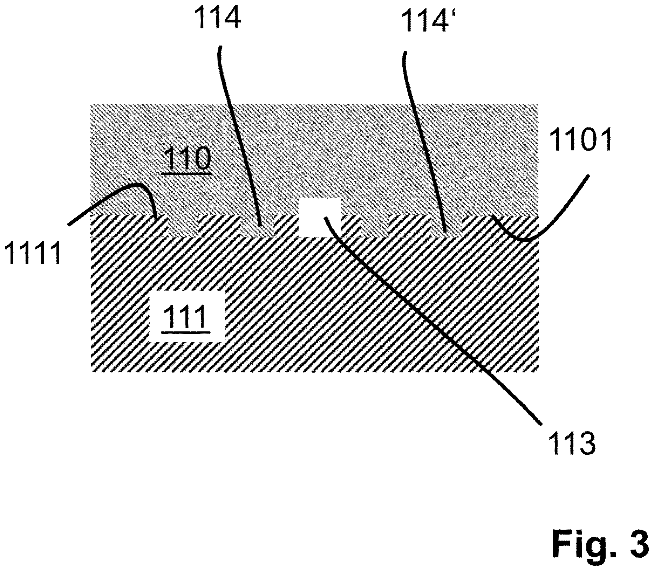

Je nach Anwendung ist das radiometrische Mess-System für den Messbetrieb feuerfest auszulegen, wie es beispielsweise in der Normenreihe IEC 62598:2011 festgelegt ist. Eine erfindungsgemäße Möglichkeit, den Strahlenschutzbehälter 11 aufwandsarm zu fertigen, ohne auf feuerfestes Wolfram als Fertigungsmaterial zurückgreifen zu müssen, wird daher anhand von Fig. 2 und Fig. 3 näher erläutert:
Der dort gezeigte Strahlenschutzbehälter 11 für die Strahlenquelle 10 bzw. für einen Einsatz 3, in dem die Strahlenquelle 10 eingelassen ist, basiert auf zwei quaderförmigen Grundkörpern 110, 111, von denen in Fig. 2 der Übersichtlichkeit halber lediglich der erste Grundkörper 110 dargestellt ist. Beide Grundkörper 110, 111 weisen jeweils eine erste Oberfläche 1101 bzw. eine zweite Oberfläche 1111 auf, wobei die Oberflächen 1101, 1111 mit Ausnahme eines Strahlen-Hohlleiters 113 und mit Ausnahme von Strahlen-Absorptionsstrukturen 114, 114`, 114" jeweils planar ausgebildet sind. Dabei bilden sich die planaren Oberflächen 1101, 1111 im gezeigten Ausführungsbeispiel jeweils aus einer der Seitenflächen des Quaders.

Fig. 3 zeigt eine Querschnitts-Ansicht des Strahlenschutzbehälters 11, die orthogonal zur Achse a des Strahlen-Hohlleiters 113 und auf Höhe zwischen der ersten Absorptionsstruktur 114 und dem ersten Endbereich 1130 verläuft: Wie daraus deutlich wird, sind die Grundkörper 110, 111 im fertiggestellten Zustand des Strahlenschutzbehälters 11 so aneinander befestigt, dass die überwiegend planaren Oberflächen 1101, 1111 mit Ausnahme des Strahlen-Hohlleiters 113 im Rahmen der Fertigungstoleranzen formschlüssig aneinandergrenzen, so dass die planaren Bereiche eine entsprechend planare Ebene E aufspannen. Da die Grundkörper 110, 111 aus Stahl fertigbar sind, können sie beispielsweise entlang der Ränder der Oberflächen 1101, 1111 verschweißt werden, um den Strahlenschutzbehälter 11 auszubilden. Es ist jedoch auch denkbar, die Grundkörper 110, 111 mittels einer 14 Schraubverbindung zu verbinden. Wie in Fig. 2 angedeutet wird, können die Grundkörper 110, 111 hierzu mit jeweils vier orthogonal zur Ebene E verlaufenden Schrauben-Durchführungen bzw. vier Innengewinden versehen werden, wobei die Durchführungen des einen Grundkörpers 110, 111 in diesem Fall deckungsgleich zu den Durchführungen bzw. Innengewinden des anderen Grundkörpers 110, 111 anzuordnen sind.

Der Strahlen-Hohlleiter 113 bildet sich innerhalb des zusammengesetzten Strahlenschutzbehälters 11 aus gegenüberliegenden, spiegelsymmetrisch ausgebildeten Vertiefungen in den Oberflächen 1101, 1111 der Grundkörper 110, 111 derart aus, dass der Strahlen-Hohlleiter 113 innerhalb der Ebene E von einem ersten offenen Endbereich 1130 am Quader zu einem gegenüberliegenden Endbereich 1131 des Quaders verläuft.

Bei dem in Fig. 2 bzw. Fig. 3 gezeigten Ausführungsbeispiel weisen die Vertiefungen des Strahlen-Hohlleiters 113 einen rechteckigen Querschnitt auf, so dass der resultierende Strahlen-Hohlleiter 113 ebenfalls einen rechteckigen Querschnitt aufweist. Im Gegensatz zu dieser gezeigten Darstellung ist es alternativ ebenfalls denkbar, dass der Strahlen-Hohlleiter 113 einen runden Querschnitt aufweist, wozu die entsprechenden Vertiefungen jeweils einen halbrunden Querschnitt aufzuweisen haben. Alternativ zur gezeigten Ausführungsvariante ist es zudem denkbar, dass der Strahlen-Hohlleiter 113 lediglich durch eine Vertiefung in einer der beiden Oberflächen 1101, 1111 ausgebildet wird. Unabhängig von der Querschnittsform des Strahlen-Hohlleiters 113 kann der Strahlen-Hohlleiter 113 zu einer verbesserten Strahlbündelung so ausgelegt werden, dass sich der Strahl-Hohlleiter 113 gen zweitem Endbereich 1131 aufweitet, wie es in Fig. 2 dargestellt ist. Gebildet werden können die Vertiefung(en) für den Strahlen-Hohlleiter 113 beispielsweise durch nachträgliche Bearbeitung der Oberflächen 1101, 1111 mittels entsprechender Zerspanungsverfahren.

Auch im Bereich der Strahlen-Absorptionsstrukturen 114, 114`, 114" grenzen die Oberflächen 1101, 1111 nach Verbinden der zwei Grundkörper 110, 111 im Toleranzbereich des entsprechenden Fertigungsverfahrens formschlüssig aneinander an, da sich die Strahlen-Absorptionsstrukturen 114, 114`, 114" aus entsprechenden Erhebungen in einer der zwei Oberflächen 1101 sowie korrespondierenden Vertiefungen in der jeweils anderen Oberfläche 1101 ausbilden. Wie in Fig. 3 zu sehen ist, befinden sich die Erhebungen der Strahlen-Absorptionsstrukturen 114, 114`, 114" im gezeigten Ausführungsbeispiel in der ersten Oberfläche 1101 bzw. im ersten Grundkörper 110, wobei der zweite Grundkörper 111 in der zweiten Oberfläche 1111 die hierzu korrespondierenden Vertiefungen aufweist, wie aus Fig. 3 zu erkennen ist.

Die in Fig. 2 und Fig. 3 gezeigte Ausführungsvariante des Strahlenschutzbehälters 11 umfasst drei Strahlen-Absorptionsstrukturen 114, 114`, 114", die entlang der Strahl-Achse a jeweils in zunehmender Entfernung zum ersten Endbereich 1130 angeordnet sind. Dabei wird die Form, welche die Strahlen-Absorptionsstrukturen 114, 114`, 114" in der Ebene E ausbilden, aus Fig. 2 ersichtlich: Demnach gehen die Strahlen-Absorptionsstrukturen 114, 114`, 114" in der Ebene E beidseitig orthogonal von der Strahl-Achse a aus, wobei sich die die Strahlen-Absorptionsstrukturen 114, 114`, 114" mit zunehmender Entfernung zur Strahl-Achse a kreissegmentförmig gen erstem Endbereich 1130 krümmen. Dabei ist die Strahlen-Absorptionsstruktur 114, die am nächsten zum ersten Endbereich 1130 hin angeordnet ist, und die mittlere Strahlen-Absorptionsstruktur 114' jeweils um 90° gekrümmt. Die Strahlen-Absorptionsstruktur 114" die am nächsten zum zweiten Endbereich 1131 hin angeordnet ist, weist ein Krümmung von ca. 30° gen erstem Endbereich 1130 auf.

Durch diese Auslegung verhindern die Strahlen-Absorptionsstrukturen 114, 114`, 114", sobald die Strahlenquelle 10 am ersten Endbereich 1130 angebracht ist, einen seitlichen Strahlungs-Austritt aus dem Strahlenschutzbehälter 11 entlang der Ebene E, auch wenn etwaige Toleranzen bei der Fertigung bzw. beim Verbinden der Grundkörper 110, ,111 zu mangelnder Formschlüssigkeit zwischen den Oberflächen 1101, 1111 führen. Gebildet werden können die Vertiefungen und Erhebungen für die Strahlen-Absorptionsstrukturen 114, 114`, 114" beispielsweise wiederum durch Bearbeitung der Oberflächen 1101, 1111 mittels entsprechender Zerspanungsverfahren, bevor die Grundkörper 110, 111 verbunden werden.

Wie in Fig. 2 dargestellt, ist die Strahlenquelle 10 in der dortigen Ausführungsvariante zur Befestigung am ersten Endbereich 1130 in einen Dreh-Einsatz 3 eingefasst. Dabei ist der Einsatz 3 so ausgebildet, das die Strahlenquelle 10 innerhalb des Einsatzes 3, bis auf eine Öffnung hin zum ersten Endbereich 1130 des Strahlen-Hohlleiters 113, allseitig durch eine Wolfram-basierte Ummantelung 101 abgeschirmt ist. Dabei wird unter dem Begriff *"Öffnung"* in diesem Zusammenhang auch ein mit einem entsprechenden Material ausgekleideter Bereich verstanden, welcher von der Strahlung der Strahlungsquelle 10 verlustarm durchdrungen werden kann, bspw. 1,5 mm starker Stahl.

Der Dreh-Einsatz 3 und die Grundkörper 110, 111 sind mit einer korrespondierenden Schraubverbindung 14 ausgelegt, um den Dreh-Einsatz 3 derart am Strahlenschutzbehälter 11 anschrauben zu können, so dass die Öffnung der Strahlenquelle 10 innerhalb des Dreh-Einsatzes 3 an den ersten Endbereich 1130 des Strahlen-Hohlleiters 113 anschließt. Hierzu ist die Strahlenquelle 10 innerhalb des Dreh-Einsatzes 3 auf der Gewinde-Achse der Schraubverbindung 14 angeordnet. Zudem ist die Schraubverbindung 14 so ausgelegt, dass ihre Gewinde-Achse deckungsgleich zur Strahl-Achse a des Strahlen-Hohlleiters 113 verläuft. Hierdurch liegt die Strahlenquelle 10 im befestigten Zustand automatisch auch in der Strahl-Achse a des Strahlen-Hohlleiters 113, so dass die Strahlenquelle 10 - ausschließlich - über den zweiten Endbereich 1131 des Strahlen-Hohlleiters entlang dessen Strahl-Achse a abstrahlt.

Zur Realisierung der Schraubverbindung 14 umfasst der Dreh-Einsatz 3 in der gezeigten Ausführungsvariante ein entsprechendes Außengewinde, wobei die Grundkörper 110, 111 ein korrespondierendes Innengewinde ausbilden. Es versteht sich im Rahmen der Erfindung von selbst, dass der Dreh-Einsatz 3 alternativ zur gezeigten Darstellung auch das Innengewinde und der Strahlenschutzbehälter 11 das Außengewinde der Schraubverbindung 14 verfügen können.

Dadurch, dass die Gewinde-Achse des Schraubgewinde 14 bei der in Fig. 2 gezeigten Ausführungsvariante deckungsgleich mit der Strahl-Achse a des Strahlen-Hohlleiters 113 verläuft, und dass sich die Strahlenquelle 10 innerhalb des Dreh-Einsatzes 3 auf der Gewinde-Achse des Schraubgewindes 14 befindet, strahlt die Strahlenquelle 10, sobald sie auch nur unvollständig angeschraubt ist, automatisch ab. Im Gegensatz zu dieser Ausführungsform kann eine Shutter-Funktion zum Transport des Strahlenschutzbehälters 11 realisiert werden, sofern die Strahl-Achse a des Strahlen-Hohlleiters 113 zwar parallel zur Gewinde-Achse des Schraubgewinde 14 verläuft, jedoch mit einem definierten, radialen Versatz. Zur Realisierung der Shutter-Funktion ist in diesem Fall außerdem die Strahlenquelle 10 innerhalb des Dreh-Einsatzes 3 mit demselben, radialen Versatz zur Gewinde-Achse der Schraubverbindung 14 anzuordnen. Hierdurch ist der resultierende Shutter nur dann geöffnet, wenn der Dreh-Einsatz 3 genau soweit in den Strahlenschutzbehälter 11 eingeschraubt ist, dass sich die Strahlenquelle 10 in der Strahl-Achse a des Strahlen-Hohlleiters 113 befindet. Optimalerweise ist die Shutter-Funktion derart umgesetzt, dass der Shutter geöffnet ist, wenn der Dreh-Einsatz 3 bis zu einem definierten Endanschlag in den Strahlenschutzbehälter 11 eingeschraubt ist. Um Missbrauch oder Unfälle im Zusammenhang mit der Strahlenquelle 10 zu vermeiden, können der Dreh-Einsatz 3 und der Strahlenschutzbehälter 11 außerdem mit einem Verschließ-Mechanismus 4 versehen werden, mittels dem der Dreh-Einsatz 3 in einer Position am Strahlenschutzbehälter 11 fixierbar ist, in welcher der Shutter geschlossen ist, bzw. in welcher sich die Strahlenquelle 10 nicht in der Strahl-Achse a des Strahlen-Hohlleiters 113 befindet.

### Bezugszeichenliste

- 1: Füllgut
- 2: Behälter
- 3: Dreheinsatz
- 4: Verschließ-Mechanismus
- 10: Radioaktive Strahlenquelle
- 11: Strahlenschutzbehälter
- 12: Detektor-Einheit
- 13: Auswertungs-Einheit
- 14: Schraubverbindung
- 101: Ummantelung
- 110: Erster Grundkörper
- 111: Zweiter Grundkörper
- 112: Verbindungsmittel
- 113: Strahlen-Hohlleiter
- 114: Strahlen-Absorptionsstruktur
- 1101: Erste Oberfläche
- 1111: Zweite Oberfläche
- 1130: Erster Endbereich
- 1131: Zweiter Endbereich
- a: Strahl-Achse
- E: Ebene

## Patentansprüche

1. Strahlenschutzbehälter (11) für eine Strahlenquelle (10) eines Mess-Systems zur radiometrischen Dichte- oder Füllstandsmessung (1), umfassend:
- Einen ersten Grundkörper (110) mit einer ersten, planaren Oberfläche (1101),
- Einen zweiten Grundkörper (111) mit einer zweiten, planaren Oberfläche (1111),
- Ein erstes Verbindungsmittel (112), welches den ersten Grundkörper (110) und den zweiten Grundkörper (111) an den Oberflächen (1101, 1111) derart formschlüssig verbindet, dass die Oberflächen (1101, 1111) eine planare Ebene (E) definieren,
- Einen Strahlen-Hohlleiter (113), der durch die zwei Grundkörper (110, 111) ausgebildet wird, mit
∘ einem ersten offenen Endbereich (1130), an dem die Strahlenquelle (10) fixierbar ist, und
∘ einem zweiten offenen Endbereich (1131),
**gekennzeichnet durch**
- zumindest eine erste Strahlen-Absorptionsstruktur (114), welche durch Vertiefungen und komplementäre Erhebungen in der ersten Oberfläche (1101) bzw. in der zweiten Oberfläche (1111) derart ausgebildet wird, dass die erste Strahlen-Absorptionsstruktur (114) ausgehend vom Strahlen-Hohlleiter (113) in der Ebene (E) verläuft
wobei der Strahlen-Hohlleiter (113) gerad-achsig in der Ebene (E) verläuft.

2. Strahlenschutzbehälter (11) nach Anspruch 1, wobei die Strahlen-Absorptionsstruktur (114) in Bezug zur Strahl-Achse (a) beidseitig insbesondere symmetrisch jeweils einen vom Strahlen-Hohlleiter (113) ausgehenden Verlauf aufweist.

3. Strahlenschutzbehälter nach Anspruch 1 oder 2, wobei die Strahlen-Absorptionsstruktur (114) in Bezug zur Strahl-Achse (a) in der Ebene (E) einen Verlauf aufweist, der zum ersten Endbereich (1130) hin kreissegmentförmig um bis zu 90° gekrümmt ist.

4. Strahlenschutzbehälter nach einem der vorhergehenden Ansprüche, umfassend:
- drei in der Ebene (E) angeordnete Strahlen-Absorptionsstrukturen (114, 114`, 114"), die in Bezug zur Strahl-Achse (a) jeweils in zunehmender Entfernung zum ersten Endbereich (1130) angeordnet sind.

5. Strahlenschutzbehälter nach einem der vorhergehenden Ansprüche, wobei die Strahlen-Absorptionsstruktur (114, 114`, 114") einen rechteckigen Querschnitt aufweist.

6. Strahlenschutzbehälter nach einem der vorhergehenden Ansprüche, wobei der erste Grundkörper (110) und/oder der zweite Grundkörper (111) aus einem Stahl gefertigt sind/ist.

7. Strahlenschutzbehälter nach einem der vorhergehenden Ansprüche, wobei das erste Verbindungsmittel (112) als Schraubverbindung ausgelegt ist.

8. Strahlenschutzbehälter nach Anspruch 6, wobei das erste Verbindungsmittel (112) als Schweißverbdingung ausgelegt ist.

9. Mess-System (1) zur radiometrischen Bestimmung der Dichte- und/oder Füllstands eines in einem Behälter (3) befindlichen Füllgutes (2), umfassend:
- Einen Strahlenschutzbehälter (11) nach einem der vorhergehenden Ansprüche, welcher derart in Bezug zum Behälter (3) anbringbar ist, dass der zweite Endbereich (1131) des Strahlen-Hohlleiter (113) gegen den Behälter (3) gerichtet ist,
- eine radioaktive Strahlenquelle (10), die am ersten Endbereich (1130) des Strahlen-Hohlleiters (113) befestigt ist,
- eine Detektor-Einheit (12), die der Strahlenquelle (10) derart gegenüberliegend am Behälter (3) in der Strahl-Achse (a) anbringbar ist, um eine Strahlenintensität der Strahlenquelle (10) nach Durchstrahlen des Füllgutes (2) zu detektieren,
- eine Auswertungs-Einheit (13), die ausgelegt ist, um anhand der empfangenen Strahlenintensität die Dichte und/oder den Füllstand des Füllgutes im Behälter (3) zu bestimmen.

10. Mess-System nach Anspruch 9, wobei die Strahlenquelle (10) mittels einer Schraubverbindung (14) derart am Strahlenschutzbehälter (11) befestigbar ist, dass eine Gewinde-Achse der Schraubverbindung (14) parallel zur Strahl-Achse (a) verläuft.

11. Mess-System nach Anspruch 10, wobei die Strahlenquelle (10) in Bezug zur Gewinde-Achse der Schraubverbindung (14) mit einem definierten radialen Versatz angeordnet ist, und wobei der Strahlen-Hohlleiter (113) derart angeordnet ist, dass dessen Strahl-Achse (a) den definierten radialen Versatz zur Gewinde-Achse der Schraubverbindung (14) aufweist.

## Claims

1. Radiation protection container (11) for a radiation source (10) of a measuring system for radiometric density or level measurement (1), comprising:
- A first base body (110) with a first, planar surface (1101),
- a second base body (111) with a second, planar surface (1111),
- a first connecting means (112) which positively connects the first base body (110) and the second base body (111) at the surfaces (1101, 1111) in such a way that the surfaces (1101, 1111) define a planar plane (E),
- a beam waveguide (113), which is formed by the two base bodies (110, 111), with
o a first open end region (1130) to which the radiation source (10) can be fixed, and
o a second open end region (1131),
**characterized by**
- at least one first beam absorption structure (114), which is formed by depressions and complementary elevations in the first surface (1101) or in the second surface (1111) in such a way that the first beam absorption structure (114) extends in the plane (E) starting from the beam waveguide (113),
wherein the radiation waveguide (113) extends in a straight line in the plane (E).

2. Radiation shielding container (11) according to claim 1, wherein the radiation absorption structure (114) has on both sides, in particular symmetrically, a course starting from the radiation waveguide (113) in relation to the beam axis (a).

3. Radiation shielding container according to claim 1 or 2, wherein the radiation absorption structure (114) has a course in the plane (E) in relation to the beam axis (a) which is curved in the shape of a circle segment by up to 90° towards the first end region (1130).

4. Radiation shielding container according to one of the preceding claims, comprising:
- three radiation absorption structures (114, 114', 114") arranged in the plane (E), each arranged at an increasing distance from the first end region (1130) with respect to the beam axis (a).

5. Radiation shielding container according to one of the preceding claims, wherein the radiation absorption structure (114, 114', 114") has a rectangular cross-section.

6. radiation shielding container according to one of the preceding claims, wherein the first base body (110) and/or the second base body (111) are/is made of a steel.

7. Radiation shielding container according to one of the preceding claims, wherein the first connecting means (112) is designed as a screw connection.

8. radiation shielding container according to claim 6, wherein the first connecting means (112) is designed as a welded connection.

9. Measuring system (1) for radiometrically determining the density and/or filling level of a filling material (2) located in a container (3), comprising:
- A radiation shielding container (11) according to any one of the preceding claims, which is mountable with respect to the container (3) such that the second end portion (1131) of the radiation waveguide (113) is directed towards the container (3),
- a radioactive radiation source (10) which is attached to the first end region (1130) of the radiation waveguide (113),
- a detector unit (12) which can be mounted opposite the radiation source (10) on the container (3) in the beam axis (a) in such a way as to detect a radiation intensity of the radiation source (10) after radiation has passed through the filling material (2),
- an evaluation unit (13) which is designed to determine the density and/or the filling level of the filling material in the container (3) on the basis of the received radiation intensity.

10. Measuring system according to claim 9, wherein the radiation source (10) can be fastened to the radiation shielding container (11) by means of a screw connection (14) in such a way that a threaded axis of the screw connection (14) runs parallel to the beam axis (a).

11. Measuring system according to claim 10, wherein the radiation source (10) is arranged with a defined radial offset in relation to the threaded axis of the screw connection (14), and wherein the radiation waveguide (113) is arranged in such a way that its beam axis (a) has the defined radial offset to the threaded axis of the screw connection (14).

## Revendications

1. conteneur blindé (11) pour une source de rayonnement (10) d'un système de mesure pour la mesure radiométrique de densité ou de niveau (1), comprenant :
- Un premier corps de base (110) avec une première surface plane (1101),
- Un deuxième corps de base (111) avec une deuxième surface plane (1111),
- Un premier moyen de liaison (112) qui relie par complémentarité de forme le premier corps de base (110) et le deuxième corps de base (111) au niveau des surfaces (1101, 1111) de telle sorte que les surfaces (1101, 1111) définissent un plan plan (E),
- un guide d'ondes de rayonnement (113), qui est formé par les deux corps de base (110, 111), avec
o une première zone d'extrémité ouverte (1130), sur laquelle la source de rayonnement (10) peut être fixée, et
o une deuxième zone d'extrémité ouverte (1131),
**caractérisé par**
- au moins une première structure d'absorption de rayonnement (114) qui est formée par des creux et des bosses complémentaires dans la première surface (1101) et dans la deuxième surface (1111), respectivement, de telle sorte que la première structure d'absorption de rayonnement (114) s'étend dans le plan (E) à partir du guide d'ondes de rayonnement (113),
le guide d'ondes (113) s'étendant dans le plan (E) selon un axe rectiligne.

2. Conteneur blindé (11) selon la revendication 1, la structure d'absorption des rayons (114) présentant des deux côtés, en particulier de manière symétrique, un tracé partant du guide d'ondes pour rayons (113) par rapport à l'axe des rayons (a).

3. Conteneur blindé selon la revendication 1 ou 2, dans lequel la structure d'absorption des rayons (114) présente, par rapport à l'axe du faisceau (a), dans le plan (E), un tracé qui est courbé en forme de segment de cercle jusqu'à 90° en direction de la première zone d'extrémité (1130).

4. Conteneur blindé selon l'une des revendications précédentes, comprenant :
- trois structures d'absorption des rayons (114, 114', 114") disposées dans le plan (E), chacune étant disposée à une distance croissante de la première zone d'extrémité (1130) par rapport à l'axe des rayons (a).

5. Conteneur blindé selon l'une des revendications précédentes, dans lequel la structure d'absorption des rayonnements (114, 114', 114") présente une section transversale rectangulaire.

6. Conteneur blindé selon l'une des revendications précédentes, dans lequel le premier corps de base (110) et/ou le deuxième corps de base (111) est/sont fabriqué(s) à partir d'un acier.

7. Conteneur blindé selon l'une des revendications précédentes, dans lequel le premier moyen d'assemblage (112) est conçu comme un assemblage vissé.

8. Conteneur blindé selon la revendication 6, dans lequel le premier moyen de liaison (112) est conçu comme une liaison soudée.

9. Système de mesure (1) pour la détermination radiométrique de la densité et/ou du niveau de remplissage d'un produit de remplissage (2) se trouvant dans un récipient (3), comprenant :
- un conteneur blindé (11) selon l'une des revendications précédentes, qui peut être monté par rapport au conteneur (3) de telle sorte que la deuxième zone d'extrémité (1131) du guide d'ondes de rayonnement (113) est dirigée vers le conteneur (3),
- une source de rayonnement radioactive (10) fixée à la première partie d'extrémité (1130) du guide d'onde de rayonnement (113),
- une unité de détection (12) qui peut être montée sur le récipient (3), en face de la source de rayonnement (10), dans l'axe du faisceau (a), de manière à détecter une intensité de rayonnement de la source de rayonnement (10) après avoir traversé le produit de remplissage (2),
- une unité d'évaluation (13) qui est conçue pour déterminer la densité et/ou le niveau de remplissage du produit dans le récipient (3) à l'aide de l'intensité de rayonnement reçue.

10. Système de mesure selon la revendication 9, dans lequel la source de rayonnement (10) peut être fixée au conteneur blindé (11) au moyen d'un assemblage à vis (14) de telle sorte qu'un axe de filetage de l'assemblage à vis (14) s'étend parallèlement à l'axe du faisceau (a).

11. Système de mesure selon la revendication 10, dans lequel la source de rayonnement (10) est disposée avec un décalage radial défini par rapport à l'axe de filetage de l'assemblage vissé (14), et dans lequel le guide d'ondes de rayonnement (113) est disposé de telle sorte que son axe de faisceau (a) présente le décalage radial défini par rapport à l'axe de filetage de l'assemblage vissé (14).
